# EUROPÄISCHE PATENTSCHRIFT

(11) **EP 1 362 405 B1**
(45) Veröffentlichungstag und Bekanntmachung des Hinweises auf die Patenterteilung: **20.04.2005**
(21) Anmeldenummer: 02712753.9
(22) Anmeldetag: 07.02.2002
(51) Int. Cl.: H02K 5/22, H02K 11/00

(54) **STELLVORRICHTUNG FÜR EINEN MOTOR**
REGULATING DEVICE FOR A MOTOR
DISPOSITIF DE REGLAGE POUR UN MOTEUR

(30) Priorität: 22.02.2001 DE 10108548
(43) Veröffentlichungstag der Anmeldung: 19.11.2003
(73) Patentinhaber: SIEMENS AKTIENGESELLSCHAFT, 80333 München (DE)
(72) Erfinder: HAUSELT, Peter, 92284 Poppenricht (DE); KASER, Josef, 92263 Ebermannsdorf (DE); LEHMEIER, Annemarie, 92289 Ursensollen (DE); MEINKE, Martin, 92224 Amberg (DE); NIEDERMEIER, Karl, 97318 Kitzingen (DE); NOETH, Christoph, 97724 Burglauer (DE); ULRICH, Jens, 98704 Langewiesen (DE); WUNSCHIK, Roman, 90513 Zirndorf (DE)
(86) Internationale Anmeldenummer: PCT/DE2002/000452
(87) Internationale Veröffentlichungsnummer: WO 2002/067405

(56) Entgegenhaltungen:
- WO-A-99/13565
- DE-A- 4 209 167
- DE-A- 19 704 801
- US-A- 3 586 910

## Beschreibung

Die Erfindung bezieht sich auf eine Stellvorrichtung für einen Motor gemäß dem Oberbegriff des Anspruchs 1.

Eine Stellvorrichtung dient in Verbindung weiterer Elemente unter anderem zum Starten, Ein- und Ausschalten von Betriebsmitteln, wie z.B. eines Motors. Der Anwendungsbereich solcher Stellvorrichtungen erstreckt sich vom Einsatz in einer Steuerung für Anlagen bishin zur Verwendung in Maschinen.

Eine Stellvorrichtung der vorab genannten Gattung mit Elementen, wie beispielsweise einer Steuereinheit und einem Stellglied in Form eines Schaltgeräts, sind aus der Praxis hinlänglich bekannt.

Schaltgeräte dieser Art sind vielfach erprobt und haben sich in der Praxis bestens bewährt, sind jedoch für eine unmittelbare, gekapselte Verwendung, beispielsweise nahe eines Motors, auf Grund ihrer Betriebseigenschaften nur bedingt einsatzfähig.

Publik gemäß DE 197 04 801 C2 ist auch eine Motorschaltstufe mit einer Ansteuereinheit, die elektronische Schaltgeräte und Kühlelemente aufweist.

Problematisch ist hierbei zum einen die beim Betrieb der elektronischen Schaltgeräte entstehende Verlustleistung, der durch aufwendige Kühlmaßnahmen entgegengewirkt wird. Zum anderen bedarf es häufig, bedingt durch sicherheitstechnische Maßgaben, eines zusätzlichen Schaltgerätes, welches der Vorgabe einer Abschaltung über Schaltstücke zur Erzeugung einer Lufttrennstrecke genügt.

Die DE-A1- 4209167 offenbart eine Schalt - und Überwachungseinheit für elektrische Antriebe, wobei Transistoren mit Schutzmechanismen, wie beispielweise Überspannungs- bzw. Übertemperaturschutz beschrieben sind.

Der Erfindung liegt die Aufgabe zugrunde, eine Vorrichtung mit - gegenüber dem Stand der Technik - verbesserten Betriebseigenschaften anzugeben, die eine räumlich kompakte und schnelle Anordnung am zu schaltenden Betriebsmittel erlaubt. Die Vorrichtung soll sich des Weiteren durch ein verlustleistungsarmes und zuverlässig trennendes Schalten auszeichnen.

Diese Aufgabe wird durch eine Vorrichtung der eingangs genannten Art gelöst, bei der erfindungsgemäß das Stellglied ein elektromagnetisches Schaltglied umfasst und das Steuersignal als Taktsignal ausgeführt ist. Unter Berücksichtigung zumindest einer Wärmequelle innerhalb oder gegebenenfalls außerhalb des Gehäuses, ist dieses Taktsignal derart bemessen, dass die Betriebstemperatur des Schaltgliedes unterhalb eines oberen zulässigen Grenzwertes liegt.

Mit dieser Stellvorrichtung für einen Motor wird erreicht, dass einerseits eine zuverlässige Trennung der Schaltstücke des elektromagnetisches Schaltgliedes über eine Luftstrecke erfolgt. Andererseits ist das Stellglied so gewählt, dass es trotz einer gekapselten Verwendung nahe eines Motors beispielsweise, verlustleistungsarm und dadurch ohne Kühlmaßnahmen betrieben werden kann.

Die durch die Erfindung erzielbare Einsparung eines Motorklemmbrettes und der zugehörigen Verdrahtung ist nicht zuletzt auf die vordefinierte und kompakte Bauweise zurückzuführen. Dies bedingt einen schnellen und dennoch fehlerfreien Anschluss von Betriebs- und Steuermitteln. Durch die dezentrale Anordnung der Stellvorrichtung im Vergleich zu einer konventionellen, zentralen Stellvorrichtung geht ein geringerer Flächenbedarf durch den Wegfall von Schaltschränken und Kabeltrassen einher, wie auch eine Reduzierung der Materialkosten durch die Einsparung von Kabeln. Darüber hinaus ergibt sich bei weiterem Vergleichen ein Kostenvorteil durch geringere Montagekosten und durch kürzere Inbetriebnahmezeiten.

Bevorzugt weist das Schaltglied zumindest einen Schütz auf. Mittels Schütze können verschiedene Start- und Betriebskonfigurationen geschaltet werden. Dabei stehen unter anderem die Konfigurationen als Direkt- oder Wendestarter zur Auswahl, wobei darüber hinaus jegliche Betriebszustände schaltbar sind. Schütze sind weitestgehend lageunabhängig einsetzbar und bieten weitere Anschlussmöglichkeiten durch Hilfskontakte, die zudem als zwangsöffnende Kontakte ausgeführt sein können. Zwangsöffnende Kontakte spielen insbesondere in der Sicherheitstechnik eine wichtige Rolle. Mit diesem Bauelement steht ein ausgereiftes und zuverlässiges Schaltglied zur Verfügung.

In einfacher Weise ist der Schütz mit einem Überlast- und/oder einem Überstromschutz versehen. Diese Einrichtungen dienen dem Schutz von Leitungen, Kabeln, Anschluss- und Verbindungsstellen und Betriebsmitteln gegen zu hohe Erwärmung. Der Überlastschutz eines Motors beispielsweise, kann über in den Motorwicklungen integrierte Thermoelemente gesteuert werden.

Vorteilhafterweise weist das Gehäuse zumindest einen Eingang für den Anschluss an ein Energieversorgungsnetz auf. Dies ermöglicht ein einfaches elektrisches und mechanisches Koppeln einer unter Umständen bereits vorkonfektionierten Netzleitung und ggf. ein Durchschleifen der Energieversorgung auf weitere Betriebsmittel.

Zweckmäßigerweise weist das Gehäuse zumindest einen Steuereingang für die Steuereinheit auf. Ähnlich wie beim Eingang für den Anschluss an das Energieversorgungsnetz ist auch hierbei eine rationelle Verbindungstechnik zur elektrischen und mechanischen Kopplung einer Steuerleitung am Steuereingang möglich.

Mit Vorteil ist die Steuereinheit direkt oder über ein Kommunikationsmodul indirekt ansteuerbar. Diese Art der Funktionsteilung ermöglicht sowohl eine Direktsteuerung des Motors, als auch eine indirekte Steuerung und Anbindung an ein Bussystem. Ein funktionelles Zusammenwirken zwischen direkter und indirekter Ansteuerung kann ebenfalls durch eine derartige Verschaltung bewirkt werden.

Bevorzugt weist das Kommunikationsmodul eine Schnittstelle zu einem Bussystem auf. Die Anbindung an die Schnittstelle zu einem Bussystem eröffnet weitere Vorteile, wie z.B. die einer zentralen Leittechniksteuerung. Hieraus ergeben sich Flexibilität hinsichtlich der Nutzung von Funktionen und Abläufen, Abdeckung eines Bedarfs an komplexen Anwendungen, Systemintelligenz bedingte Einsparungen an Betriebskosten und auch eine visualisierungstechnisch umsetzbare Transparenz im Hinblick auf die Betriebszustände.

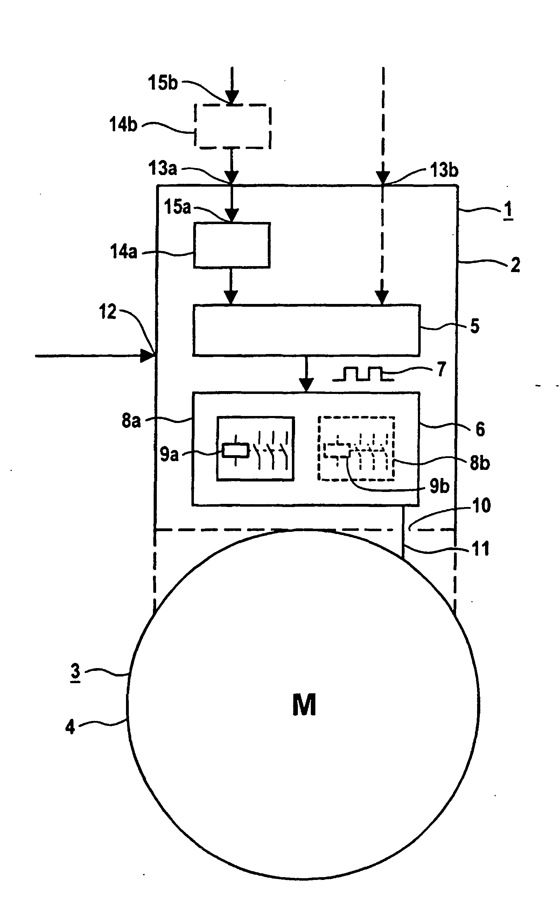

Weitere Vorteile und Details der Erfindung werden nachfolgend beispielhaft anhand der Zeichnung näher erläutert. Es zeigt die einzige Figur eine schematische Anordnung einer Stellvorrichtung an einem Motor.

Im nachfolgenden Text sind gleiche Teile der Figur mit gleichen oder sinngemäß ähnlichen Bezugszeichen versehen.

Zunächst wird auf konstruktive Details, später auf funktionelle und steuerungstechnische Details eingegangen.

Die Stellvorrichtung 1 weist ein Gehäuse 2 auf, welches an einem Motorgehäuse 4 eines davon umfassten Motors 3 anordund in seinen Konturen anpassbar ist. Das Gehäuse 2 kann hierbei als Motorklemmkasten, je nach Bedarf auch in verschiedenen Schutzarten und -klassen, ausgebildet sein. Die Anordnung der Stellvorrichtung 1 am Motorgehäuse 4 ist ggf. mit - nach dem Stand der Technik - geläufigen Befestigungsmitteln versehen. Die Befestigung kann kraft- und/oder formschlüssig erfolgen.

Im Gegensatz zu bisherigen Stellvorrichtungen, auch als Motorstarter oder als Anlasser in Form von elektromagnetischen Schaltgliedern, ist bei der Ausführung des Gehäuses 2 als Motorklemmkasten kein separates Gehäuse mehr erforderlich. Bisherige aufwendige Verbindungen zwischen Stellvorrichtung und Motor entfallen. Die Stellvorrichtung 1 mit Motor 3 und Motorgehäuse 4 ist zu einer einzigen funktionellen bzw. körperlichen Einheit zusammengefasst.

Im Bereich der Befestigung der Stellvorrichtung 1 und des Motorgehäuses 4 ist zumindest eine Öffnung 10 eingebracht, die für elektrische Verbindungsmittel, wie z.B. für eine Motoranschlussleitung, insbesondere für Wicklungsenden 11 des Motors 3, als Verbindungskanal nutzbar sind. Auf einer Montagefläche des Gehäuses 2 ist bevorzugt eine langlochförmige Öffnung parallel zur Schützlängsachse enthalten, durch die einzelne oder auch alle Wicklungsenden 11 des Motors 3 in das Gehäuse 2 geführt werden.

Das Gehäuse 2 beinhaltet eine Steuereinheit 5 und ein Stellglied 6, wobei dem Stellglied 6 von der Steuereinheit 5 ein Steuersignal 7 zugeführt ist. Das Steuersignal 7 ist hierbei als Taktsignal ausgeführt. Weitere funktionsbedingte Einheiten, wie beispielsweise ein Bremsgleichrichter, können im Gehäuse 2 ergänzt und wunschgemäß verschaltet werden.

Das Stellglied 6 umfasst zumindest ein erstes, ggf. auch ein optionales zweites elektromagnetisches Schaltglied 8a bzw. 8b. Das erste und das zweite elektromagnetische Schaltglied 8a bzw. 8b weisen jeweils einen Schütz 9a bzw. 9b mit entsprechenden, hier nicht gezeigten, Klemmstellen auf. Die Klemmstellen können wahlweise als Schraub- oder Federzugklemmen, als Flachsteck- oder Lötanschlüsse ausgeführt werden. In Abhängigkeit hiervon, sind zugeordnete Verbindungsleitungen mit passenden Anschlussmitteln zu versehen.

Die Wicklungsenden von Motoren werden üblicherweise auf einem Motorklemmbrett verdrahtet. Dieses Motorklemmbrett dient auch zum Anschluss der von außen üblicherweise durch eine Kabelverschraubung zugeführten Energieversorgung. Die hier neu vorgeschlagene Anordnung der Schütze 9a, 9b in Verbindung mit der Öffnung 10 in einer Montagefläche des Gehäuses 2, ermöglicht einen kurzen und direkten Anschluss der Wicklungsenden 11 des Motors 3 auf die Klemmstellen der Schütze 9a, 9b. Hierbei ist kein Motorklemmbrett mehr erforderlich.

Ausgehend von einem Drehstrommotor sind vorzugsweise jeweils zwei Wicklungsenden 11 mit einer Aderendhülse oder ähnlichen Anschlussmitteln zusammengeschaltet, so dass nur noch drei Wicklungsenden 11 an einem oder an den Schützen 9a, 9b angeklemmt werden müssen. Sinngemäß dazu erfolgt die Zusammenschaltung bei weiteren Motortypen.

Im Gehäuse 2 sind die Schütze 9a und 9b bevorzugt stehend in Längsrichtung zueinander angeordnet. Hierdurch ist ein nahezu optimaler Zugang zu den Klemmstellen gegeben. Eine eventuell gewünschte Wendeverdrahtung für den Hauptstromkreis kann durch vorgefertigte Strombrücken erfolgen. Die Schütze 9a und 9b können alternativ über Schraub- und/oder Schnappbefestigungen mit dem Gehäuse 2 verbunden werden. Im Falle der Schnappbefestigungen ist eine Montagefläche des Gehäuses 2 mit einer hutschienenförmigen Kontur versehen, welche bereits bei einer Gehäuseherstellung mit ausgeformt wird.

Das Gehäuse 2 kann aus verschiedenen Materialien, so z.B. aus Stahl, Aluminium, auch Aluminium-Druckguss, Gummi oder auch aus Kunststoff wie beispielsweise PPTP hergestellt werden. Bei einem Gummi- oder Kunststoffgehäuse ergeben sich zusätzliche Vorteile hinsichtlich der Formgestaltung durch die vielseitigen und praxiserprobten Verarbeitungstechniken und der daraus resultierenden Kosteneinsparungspotentiale beim Materialeinsatz und bei einer evtl. notwendigen Nachbearbeitung.

Des Weiteren können auf einfache Weise Befestigungsmöglichkeiten für die Steuereinheit 5, die ggf. als Steuerplatine ausgeführt ist und für ein Schaltgerät und dergleichen vorgesehen werden. Unter dem Aspekt der elektrischen Sicherheit, ergeben sich darüber hinaus Vorteile durch eine materialbedingte zusätzliche Isolierung und hierdurch geringe Kriech- und Luftstrecken.

Das Stellglied 6 wirkt zumindest über das erste elektromagnetische Schaltglied 8a mittels Schütz 9a auf den Motor 3. Der Schütz 9a weist Schaltkontakte auf, die sowohl einen Hauptstrom als auch einen Steuerstrom zu- und abschalten können. Insbesondere zur Umsetzung sicherheitsrelevanter Schaltfunktionen sind am Schütz 9a zwangsläufig öffnende Schaltkontakte vorgesehen.

Idealerweise ist der Schütz 9a derart gestaltet, dass das Unterteil des Schützgehäuses bereits im Gehäuse 2, z.B. in Kunststoffspritztechnik, ausgeformt sind. Magnetantriebe und Schaltkammern des Schützes 9a können dann mit einfachen Schritten auf diesem Unterteil montiert werden. Auf ähnliche oder gleiche Weise können auch Anschlüsse eines Steuerstromkreises der Schützspule integriert werden, die wiederum mittels direkter Steckverbinder mit einer Steuerplatine verbindbar sind.

Die Steuerplatine ist vorzugsweise parallel zur Längsachse der Schütze 9a, 9b auf der der Wicklungsdurchführung abgewandten Seite des Gehäuses 2 untergebracht. Hierdurch wird eine vorschriftsmäßige Trennung zwischen einem Leistungsschaltbereich und einem Signal- oder Datenverarbeitungsbereich sichergestellt.

Des Weiteren ist zur elektrischen Trennung der beiden Bereiche eine Isoliertrennwand, beispielsweise eine Hartpapierplatte, zwischen der Steuerplatine und den Schützen 9a, 9b vorgesehen. Zur einfachen Befestigung der Isoliertrennwand können zwei parallel, U-förmig umlaufende Stege im Gehäuse 2 angeordnet sein. Von Vorteil ist auch die Befestigung, z.B. mittels Schnappverbinder, der Steuerplatine über Kunststoffabstandshalter auf der den Schützen 9a, 9b abgewandten Seite der Isoliertrennwand.

Das Gehäuse 2 weist darüber hinaus einen Steuereingang 13a auf. Optional ist am Gehäuse 2 auch ein weiterer Steuereingang 13b anordbar. Beide Steuereingänge 13a, 13b dienen als sogenannter Steuersignalanschluss. An den Steuereingängen 13a und 13b sind Steckstellen an die Außenseite des Gehäuses 2 geführt, wodurch Steuerleitungen oder -module angeschlossen werden können.

Eventuell benötigte Sockel oder Gehäuse für die Steckstellen, können ebenfalls bereits im Gehäuse 2 integriert werden. Der Steuereingang 13a dient für eine indirekte Signalzuführung während der Steuereingang 13b für eine direkte Signalzuführung nutzbar ist. Die Signalzuführung erfolgt von einer hier nicht näher dargestellten übergeordneten, externen Signalversorgungseinheit.

Innerhalb oder außerhalb des Gehäuses 2 kann ein Kommunikationsmodul 14a bzw. 14b angeordnet sein, das als Schnittstellenbaustein oder als Busankoppler dient. Die indirekte Signalzuführung erfolgt hierbei über das jeweilige Kommunikationsmodul 14a, 14b, welches dabei auf die Steuereinheit 5 wirkt. Die direkte Signalzuführung auf die Steuereinheit 5 erfolgt üblicherweise durch das Ein- oder Ausschalten der Steuerspannung. Die indirekte und die direkte Signalzuführung können auch gemeinsam auf die Steuereinheit 5 wirken.

Das Kommunikationsmodul 14a, 14b weist eine Schnittstelle 15a bzw. 15b auf. Diese ermöglichen die Kommunikation über ein, hier nicht gezeigtes, Datenbussystem. Eine Anbindung an unterschiedliche Datenbussysteme, wie z.B. AS-i, EIB, CAN oder auch Profibus DP, kann mittels einem entsprechend angepassten Kommunikationsmodul erfolgen. Die Steuereinheit 5, ausgeführt als Steuerplatine, besitzt Anschlusselemente für alle im Gehäuse 2 benötigten internen Verbindungen sowie für das ggf. außerhalb des Gehäuses 2 angeordnete Kommunikationsmodul 14b. Diese Anschlusselemente sind wahlweise als Federzugklemmen und/oder als Gruppensteckverbinder ausgeführt.

Die Verbindung zum Kommunikationsmodul 14a und 14b wird vorzugsweise über eine flexible Flachbandleitung mit Gruppenstecker hergestellt. Diese Art der Anbindung ermöglicht in Verbindung mit einem quadratischen Grundaufbau des Kommunikationsmoduls 14a, 14b eine um jeweils 90° gedrehte Zuordnung zwischen dem Gehäuse 2 und dem Kommunikationsmodul 14a und 14b. Insbesondere bei beengten Einbauverhältnissen am Gehäuse 2, am Motorgehäuse 4 oder bei einer Anpassung für eine vorgegebene Kabelführung ist dies von Vorteil.

Ein Bus anderer Art findet an einem Eingang 12 des Gehäuses 2 Anwendung. Das Gehäuse 2 weist hierbei einen in die Gehäusewand integrierten Steckverbinder auf, der den Eingang 12 für den Anschluss an ein Energieversorgungsnetz bildet. Am Eingang 12 und somit an der Außenseite des Gehäuses 2, können ein oder mehrere Kontaktelemente oder Steckstellen angeordnet sein, die zur Verbindung des Energieversorgungsnetz mit der Stellvorrichtung 1 und ggf. auch mit dem Motor 3 dienen. Die inneren Energieanschlüsse werden gleichfalls direkt auf die Schütze 9a, 9b verdrahtet. Eventuell benötigte Sockel oder Gehäuse für die Kontaktelemente oder Steckstellen, können wie oben beschrieben, bereits im Gehäuse 2 integriert werden.

Die Kontaktelemente können wahlweise derart gestaltet sein, dass ein Durchschleifen der Energieversorgung ermöglicht ist. Somit besteht neben dem Datenbussystem auch ein Energiebussystem. Die Energieversorgung, üblicherweise auch als Hauptenergie bezeichnet, kann ein- oder mehrphasig, insbesondere auch dreiphasig ausgeführt sein oder auf einem Gleichspannungspotential basieren.

Der Anwender kann die Stellvorrichtung 1 ohne Eingriff in das Gehäuse 2 nur durch das Anstecken der Verbindungsleitungen in Betrieb nehmen. Durch die Verwendung von vorkonfektionierten Anschlusskabeln ist ein schneller und bereits kodierter elektrischer Anschluss gegeben.

Schaltvorgänge für den Motor 3, wie z.B. Ein, Aus, Linkslauf, Rechtslauf, Sanftanlauf und Stern-Dreieckanlauf, erfolgen über im Gehäuse 2 angeordnete, nahezu lageunabhängige, elektromagnetische Schaltglieder 8a, 8b. Die Be- und Verschaltung der elektromagnetischen Schaltglieder 8a, 8b ist ggf. anwendungsspezifisch anpassbar und kann durch standardisierte Kontakt- und Verbindungsmittel schnell, einfach und zweckmäßig vorgenommen werden.

Ein Überlastschutz ist über in den Motorwicklungen integrierte Thermoelemente gegeben. Zum Auswerten der Thermosignale und zur Steuerung und Überwachung der Schaltglieder 8a, 8b ist im Gehäuse 2 eine Steuereinheit 5 angeordnet, die als Steuerplatine ausgeführt ist. In dem der Steuereinheit 5 nachgeordneten Stellglied 6 ist zumindest ein Element zum Überstromschutz integriert, welches in Wirkverbindung mit dem jeweils zugehörigen elektromagnetischen Schaltglied 8a,8b und somit mit dem entsprechenden Schütz 9a,9b steht. Eine Anordnung oder Ausführung der Überlast- und/oder Uberstromschutzelemente kann selbstverständlich auch in einer Kombination oder in einer wahlweisen Verbindung mit der Steuereinheit 5 oder dem Stellglied 6 vorgesehen werden.

Bei im Betrieb befindlichen Motoren entsteht im Motorklemmkasten allein durch die Eigenerwärmung des Motors eine gegenüber dem Umgebungsklima erhöhte Temperatur. Weitere Klimaeinflüsse, wie z.B. die einer externen, betriebsfremden Wärmequelle oder auch wie beispielsweise die einer dauererregten und damit wärmeabstrahlenden Magnetspule, können zu ungünstigen Rahmenbedingungen führen. Die Verwendung elektromagnetischer Schaltgeräte im Motorklemmkasten scheitert bislang unter anderem daran, dass diese Schaltgeräte auf Grund ihrer Spulenerwärmung standardmäßig nur für ein Umgebungsklima deutlich unterhalb der vorab erwähnten Temperatur im Motorklemmkasten ausgelegt sind.

Abhilfe schafft eine ausgeklügelte Ansteuerung der elektromagnetischen Schaltgeräte 8a, 8b. Dies geschieht über die in der Steuereinheit 5 vorhandene Steuerplatine und der damit verbundenen elektronischen Ansteuerung der elektromagnetischen Schaltgeräte 8a, 8b mittels Steuersignal 7, welches als Taktsignal ausgeführt ist. Dadurch dass die Schützspulen getaktet werden, erfolgt eine deutliche Reduzierung der Spulenerwärmung. Ein Betrieb der elektromagnetischen Schaltglieder 8a, 8b innerhalb eines geschlossenen Gehäuses 2, insbesondere im Motorklemmkasten, ist somit ermöglicht.

Die Ausführung des Steuersignals 7 als Taktsignal ist derart gewählt, dass einerseits das Taktintervall möglichst groß und andererseits die Wirkungsdauer des Taktsignals möglichst gering gehalten ist. Dies trägt positiv zur Verminderung der Wärmeentstehung in der Schützspule bei. Nichtsdestominder bleibt bei dieser Art der Ansteuerung, die Schützspule dauerhaft erregt und führt daher nicht zu einer Verringerung der Zuverlässigkeit hinsichtlich des Schaltvermögens.

Durch die Verwendung elektromagnetischer Schaltglieder 8a, 8b ist zudem eine luftstreckenbasierende Trennung der Motorwicklungen von der Energiezufuhr gewährleistet. Die Schaltstellung der Schütze 9a, 9b wird zudem mittels zwangsgeführter Öffnerkontakte und einer zugehörigen Auswerteelektronik überwacht.

Über Steuerleitungen erfolgt eine Signalzuführung und eine Rückmeldung. Die Übertragung der Steuersignale für den Motor 3 erfolgt wahlweise durch eine Direktansteuerung oder über ein Kommunikationsmodul 14a, 14b für ein industrielles Datenbussystem. Hierzu ist eine zusätzliche Steckvorrichtung vorgesehen, über die die Hilfsspannung bzw. das Kommunikationsmodul 14a, 14b mit der Steuereinheit 5 verbunden werden kann.

Die Schnittstelle 15a, 15b zwischen der Steuereinheit 5 und dem Kommunikationsmodul 14a, 14b ist so gewählt, dass alle für den Motorschutz, die Schaltgerätesteuerung und die Eigenüberwachung des Motors 3 erforderlichen Funktionen auf der Steuereinheit 5 platziert sind. Im Kommunikationsmodul 14a, 14b sind dagegen alle zur Datenumsetzung erforderlichen Funktionen enthalten. Diese Art der Funktionsteilung ermöglicht sowohl die Direktansteuerung des Motors 3, als auch die einfache Anbindung an unterschiedliche Datenbussysteme über entsprechend angepasste Kommunikationsmodule.

## Patentansprüche

1. Stellvorrichtung (1) für einen Motor (3) mit einem dem Motor zuordbaren Gehäuse (2), in dem eine Steuereinheit (5) und ein Stellglied (6) angeordnet sind, wobei dem Stellglied (6) von der Steuereinheit (5) ein Steuersignal (7) zugeführt ist,
**dadurch gekennzeichnet, dass**
das Stellglied (6) ein elektromagnetisches Schaltglied (8a,8b) umfasst und das Steuersignal (7) als Taktsignal ausgeführt ist, welches unter Berücksichtigung, zumindest einer Wärmequelle innerhalb oder gegebenenfalls außerhalb des Gehäuses (2), derart bemessen ist, dass die Betriebstemperatur des elektromagnetischen Schaltgliedes (8a,8b) unterhalb eines oberen zulässigen Grenzwertes liegt.

2. Stellvorrichtung (1) nach Anspruch 1,
**dadurch gekennzeichnet, dass**
das elektromagnetische Schaltglied (8a,8b) zumindest einen Schütz (9a,9b) aufweist.

3. Stellvorrichtung (1) nach Anspruch 2,
**dadurch gekennzeichnet, dass**
der Schütz (9a,9b) mit einem Überlast- und/oder einem Überstromschutz versehen ist.

4. Stellvorrichtung (1) nach Anspruch 1,
**dadurch gekennzeichnet, dass**
das Gehäuse (2) zumindest einen Eingang (12) für den Anschluss an ein Energieversorgungsnetz aufweist.

5. Stellvorrichtung (1) nach Anspruch 1,
**dadurch gekennzeichnet, dass**
das Gehäuse (2) zumindest einen Steuereingang (13a,13b) für die Steuereinheit (5) aufweist.

6. Stellvorrichtung (1) nach einem der Ansprüche 1 oder 5,
**dadurch gekennzeichnet, dass**
die Steuereinheit (5) direkt oder über ein Kommunikationsmodul (14a,14b) indirekt ansteuerbar ist.

7. Stellvorrichtung (1) nach Anspruch 6,
**dadurch gekennzeichnet, dass**
das Kommunikationsmodul (14a,14b) eine Schnittstelle (15a,15b) zu einem Bussystem aufweist.

8. Stellvorrichtung (1) nach einem der Ansprüche 6 oder 7,
**dadurch gekennzeichnet, dass**
das Kommunikationsmodul (14a,14b) drehbar am Gehäuse (2) angeordnet ist.

## Claims

1. Regulating device (1) for a motor (3) having a housing which can be assigned to the motor, wherein a control unit (5) and an actuator (6) are arranged, said actuator being sent a control signal (7) by means of the control unit (5),
**characterised in that**
the actuator (6) has an electromagnetic shifting link (8a,8b) and the control signal (7) is configured as a clock signal, which is to be rated such that the operating temperature of the electromagnetic shifting link (8a, 8b) lies below an upper permissible limit value, taking into consideration at least one heat source within or if necessary outside of the housing (2).

2. Regulating device (1) according to Claim 1
**characterised in that**
the electromagnetic actuator (8a, 8b) has at least one contactor (9a, 9b)

3. Regulating device (1) according to Claim 2
**characterised in that**
the contactor (9a, 9b) is provided with an overload protection and overcurrent protection .

4. Regulating device (1) according to Claim 1
**characterised in that**
the housing (2) has at least one input (12) for the connection to an energy supply network

5. Regulating device (1) according to Claim 1
**characterised in that**
the housing (2) has at least one control input (13a, 13b) for the control unit (5)

6. Regulating device (1) according to one of Claims 1 or 5
**characterised in that**
the control unit (5) can be directly controlled or indirectly controlled by means of a communication module (14a, 14b)

7. Regulating device (1) according to Claim 6
**characterised in that**
the communication module (14a, 14b) has an interface (15a, 15b) to a bus system.

8. Regulating device (1) according to one of Claims 6 or 7
**characterised in that**
the communication module (14a, 14b) is arranged in a rotatable manner on the housing (2).

## Revendications

1. Dispositif de réglage (1) pour un moteur (3) comprend un boîtier (2) qui peut être associé au moteur et dans lequel sont mis une unité de commande (5) et un élément de réglage (6), un signal de commande (7) étant envoyé à l'élément de réglage (6) par l'unité de commande (5),
**caractérisé par le fait que** l'élément de réglage (6) comprend un élément de commutation électromagnétique (8a, 8b) et que le signal de commande (7) est réalisé en signal d'horloge qui est tel que, en tenant compte d'au moins une source de chaleur à l'intérieur ou éventuellement à l'extérieur du boîtier (2), la température de fonctionnement de l'élément de commutation électromagnétique (8a, 8b) est inférieure à une valeur limite supérieure autorisée.

2. Dispositif de réglage (1) selon la revendication 1,
**caractérisé par le fait que** l'élément de commutation électromagnétique (8a, 8b) comporte au moins un contacteur (9a, 9b).

3. Dispositif de réglage (1) selon la revendication 2,
**caractérisé par le fait que** le contacteur (9a, 9b) est muni d'une protection contre les surcharges et/ou d'une protection contre les surintensités de courant.

4. Dispositif de réglage (1) selon la revendication 1,
**caractérisé par le fait que** le boîtier (2) comporte au moins une entrée (12) pour le raccordement à un réseau d'alimentation en énergie.

5. Dispositif de réglage (1) selon la revendication 1,
**caractérisé par le fait que** le boîtier (2) comporte au moins une entrée de commande (13a, 13b) pour l'unité de commande (5).

6. Dispositif de réglage (1) selon l'une des revendications 1 ou 5,
**caractérisé par le fait que** l'unité de commande (5) peut être commandée directement ou indirectement par l'intermédiaire d'un module de communication (14a, 14b).

7. Dispositif de réglage (1) selon la revendication 6,
**caractérisé par le fait que** le module de communication (14a, 14b) comporte une interface (15a, 15b) vers un système de bus.

8. Dispositif de réglage (1) selon l'une des revendications 6 ou 7,
**caractérisé par le fait que** le module de communication (14a, 14b) est agencé de manière à pouvoir tourner sur le boîtier (2).
